# EUROPEAN PATENT APPLICATION

(11) **EP 2 266 418 A1**
(43) Date of publication of application: **29.12.2010**
(21) Application number: 09163869.2
(22) Date of filing: 26.06.2009
(51) Int. Cl.: A23G 9/08, A23G 9/10, A23G 9/12

(54) **Container having ingredients for preparing a frozen confection, container holder and device for preparing a frozen confection**

(71) Applicant: Nestec S.A., 1800 Vevey (CH)
(72) Inventor: Ravji, Sejal Jayantilal, 60000, BEAUVAIS (FR); Delande, Bruno Sadi Henri, 60690, MARSEILLE EN BEAUVAISIS (FR)
(74) Representative: Rossand, Isabelle

(57) **Abstract**

The present invention relates to a container (20) designed for being inserted into a device (1) for preparing a frozen confection (52), said container (20) comprising at least one scraper (24) movable within the container (20) and said container (20) containing ingredients (23) for producing a frozen confection (52) when being cooled and moved.

The present invention further relates to a container holder (15) adapted to receive a container (20) said container holder (15) having a heat exchange surface being in tight contact with the container (20) and comprising channels (45) allowing a cooling agent to run along the heat exchange surface.

The present invention additionally relates to a device (1) for preparing a frozen confection.

## Description

The present invention relates to a container designed for being inserted into a device for preparing a frozen confection, to a container holder designed for receiving the container and to a device for preparing a frozen confection. Specifically, the present invention relates to the field of preparing portioned or single serving freshly made frozen confection.

Current domestic ice cream makers on the market rely on scraped surface heat exchangers using a horizontal or tubular bowl. These systems utilize conventional compression cooling technology with CFC, HFC, HC, CO₂, other chemical refrigerants or thermoelectric (peltier) systems. Such systems are for example disclosed in documents W08606936, US4540288, US6267049, W02006043298, W02004089104, US5549042, US5823675, US6298668, JP2001017090, US6863916, W09611583, DE3921115, W08807330, BE901125, EP106814, EP0179027, US4583863, US2004045312, or US6041614.

These ice cream makers produce volumes of ice cream ranging from 0,5 litre to 1 litre in a time period of 20 minutes or more. The ice cream must then be removed from the bowl manually or at best requires overall cleaning cycles after dispensing.

It is therefore an object of the present invention to improve the prior art. Specifically, it is an object of the present invention to provide a possibility to prepare freshly made single portions of frozen confection without the need for cleaning cycles. Furthermore, it is an object of the present invention to provide a possibility to prepare freshly made single portions of frozen confection in a short period of time compared to the existing ice cream maker machines.

This object is solved by the independent claims.

Further features and embodiments are subject matter of the dependent claims.

Further features, advantages and objects of the present invention will become evident by means of the figures of the enclosed drawings as well as by the following detailed explanation of illustrative-only embodiments of the present invention.
Fig. 1 shows a schematic block diagram of the components of a device for preparing a frozen confection according to the present invention,
fig. 2 and 3 show different views of a preferred embodiment of a device for preparing a frozen confection according to the present invention,
fig. 4 to 7 show different embodiments of revealing the container holder within the device for preparing a frozen confection according to the present invention,
fig. 8 and 9 show different embodiments of a container according to the present invention,
fig. 10 and 11 show different embodiments of a connection mechanism for connecting the container to the device for preparing a frozen confection according to the present invention,
fig. 12a and 12b show a further embodiment of a connection mechanism according to the present invention,
fig. 13a to 13c show different embodiments of a scraper and dispensing assembly within the container according to the present invention,
fig. 14a shows a first embodiment of a container holder heat exchanger according to the present invention,
fig. 14b shows a second embodiment of a container holder heat exchanger according to the present invention,
fig. 15 and 16 show a second embodiment of a container holder according to the present invention,
fig. 17 shows an image series of a container when preparing a frozen confection according to the present invention and
fig. 18 is a flow chart showing schematically the process steps for preparing a frozen confection according to the present invention.

The present invention proposes a container which is designed for being inserted into a device for preparing a frozen confection. The container comprises ingredients and processing assembly for producing a frozen confection. The ingredients enable the preparation of frozen confection in situ. For this purpose the container comprises movable scrapers within the container which are designed to move, i. e. mix, scrape and aerate the ingredients within the container. The container further has a casing having physical properties allowing optimum heat transfer properties such that heat energy is transferred from the ingredients to an external source.

The present invention further relates to a container holder adapted to receive the container and having properties to allow an optimum heat transfer and heat (energy) removal from the ingredients in the container to the ambient (external source).

The present invention further relates to a device for preparing a frozen confection having therein a container holder into which the container is inserted. The device is adapted to cool the container and to move the processing unit within the container. For this purpose any type of movement unit can be connected by appropriate means to the processing unit of the container to transfer kinetic energy to the processing unit within the container.

The present invention thus provides a device, which comprises means to receive the container, to cool the container and to apply a moving force to the processing unit within the container, so that by cooling and processing the ingredients within the container a frozen confection can be prepared.

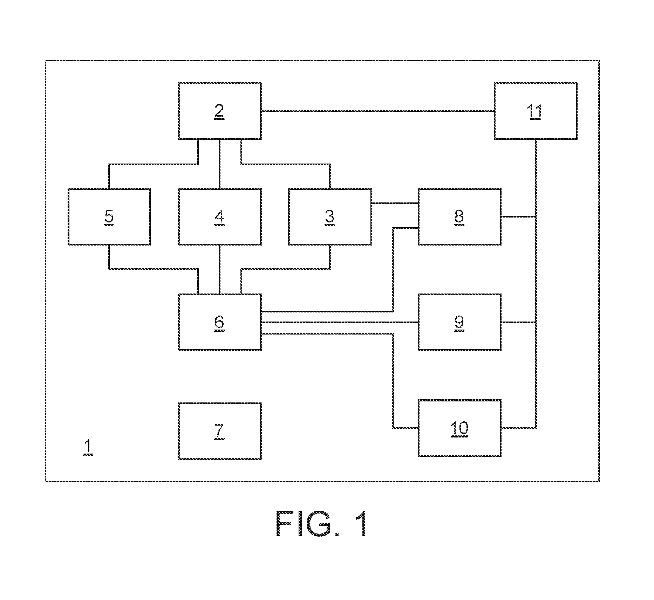

Fig. 1 shows a schematic block diagram of a device 1 for preparing a frozen confection according to the present invention.

The device 1 comprises a container holder 6 which is designed to receive the container. The container holder hereby allows the easy insertion and removal of the container comprising the ingredients for preparing a frozen confection.

Connected to the container holder 6, which functions as a heat exchanger, is a cooling system 9 which comprises a refrigeration and circulatory heat transfer system to cool the container within the container holder 6 as rapidly as possible. The container holder 6 has optimum heat transfer properties, as will be explained in detail later, for allowing optimum cooling of the ingredients within the container.

Optionally, the device 1 can comprise a defrosting system 10 to minimize the frosting of any heat exchanging parts. The defrosting system 10 can for example be a hot gas defrost system that can comprise a switchable reversed compressor gas flow valve, a defrosting plate and/or a dry air circulation system with the humidified air.

The device 1 further optionally can comprise an aeration system 8. The aeration and possibly air cooling system which is connected to the container holder 6 may comprise a mini compressor which, by proprietary design, allows the aeration of the ingredients and also facilitates the freezing of the ingredients within the container. One possibility is to flow the gaseous phase into a hollow processing unit within the container so that via several exit holes within the processing unit the gaseous phase can be delivered into the ingredients. A further possibility is to insert pressurized gaseous phase at an inlet system within the container.

In one embodiment the aeration system 8 can comprise a pressurized air injection system which pressurizes the head space within the container above the readily prepared frozen confection to dispense the frozen confection from the container.

The device 1 further comprises a movement unit 3 providing a movement system which can be attached to a corresponding connector of the container, so that kinetic energy is transferred to the processing unit within the container. In one embodiment, the movement unit 3 comprises a movable, e.g. rotatable and/or oscillating, plunger which can be connected to a corresponding connector of the container.

Optionally, the device 1 can also comprise an opening unit 4 which is adapted to open the container after the preparation of the frozen confection, so that the frozen confection can be dispensed from the container. Alternatively, the opening unit 4 can also be omitted and a manual opening step by a customer can be provided.

The device 1 further comprises a dispensing unit 5 which is adapted to dispense the prepared frozen confection from the container after the container has been opened either manually by a customer or by the opening unit 4. The dispensing unit 5 thus forces the freshly made frozen confection out of the container. Alternatively, the dispensing unit can activate the opening of the container using appropriate force by removing the closure system in place.

In a preferred embodiment the device 1 comprises a motor 2. The motor 2 is adapted to drive the dispensing unit 5, the opening unit 4 and the movement unit 3 and to provide the necessary movement to the movement unit 3. In an alternative embodiment, the motor 2 can also be omitted and can be provided by other means, e. g. a crank handle, which allows the user to manually drive the different components, specifically the connection mechanism 3.

In case that a motor 2 is provided, the motor 2 can also be used to drive the opening unit 4 and/or the dispensing unit 5. But it is also possible that one or both units are only activated manually or by other means. Other means could include the use of additional motors as required to perform separate operations individually for processing and dispensing.

Additionally, the device 1 can comprise an activation unit 11 which is adapted to activate the whole processing. The activation unit 11 starts the cooling by the cooling system 9 and in case that a motor 2 is provided, the activation unit 11 starts the motor 2. If the motor 2 is omitted or if the motor 2 only drives apart of the units, then the activation unit 11 can be directly connected with the respective units and activate the respective units directly. If an aeration system 8 and a defrosting system 10 are present, then also these systems can be activated by the activation unit 11.

Also shown in fig. 1 is a receptacle 7 which is adapted to receive the frozen confection when dispensed from the container. The receptacle 7 is of course removable from the device 1.

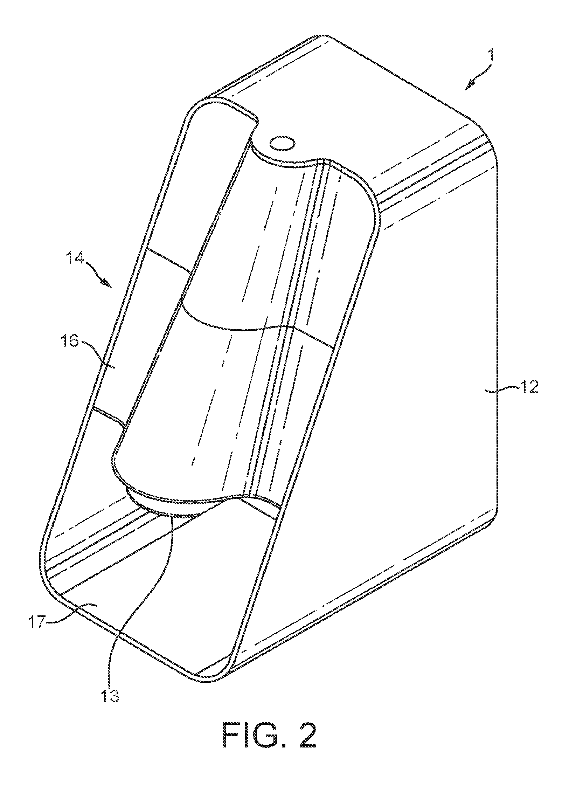

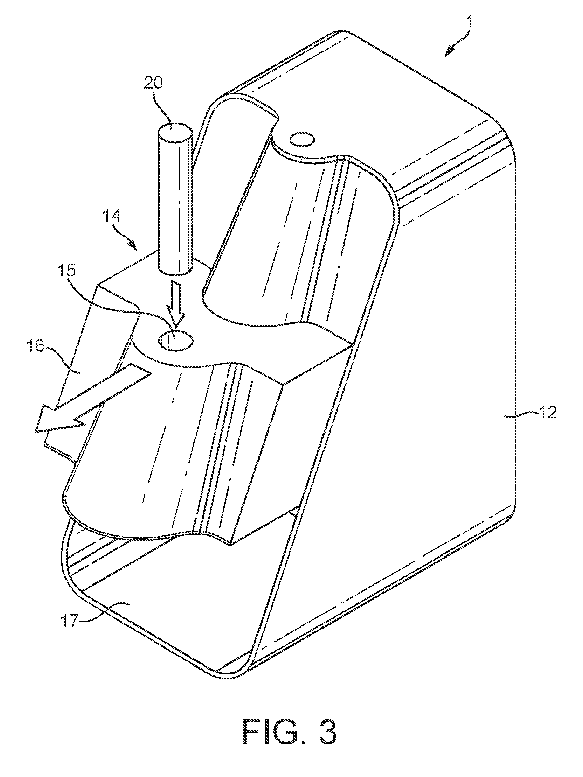

Fig. 2 and 3 show a preferred embodiment of a device for preparing a frozen confection according to the present invention. It is to be noted that fig. 2 and 3 are only examples and that the present invention comprises also every other structure and shape of a device for preparing a frozen confection falling under the scope of the present claims.

Fig. 2 and 3 show a perspective side/front view of a device 1 according to the present invention. Fig. 2 hereby shows the device in a closed state and fig. 3 shows the device in an open state, where it is possible to insert a container into the device.

The device 1 comprises a casing 12 which houses several components of the device 1. Provided within the casing 12 are preferably a condenser and a compressor (in the case of conventional vapour compression refrigeration, which form the cooling system 9). Alternatively, any other embodiment of a cooling system 9 can be provided within the casing.

Likewise, the casing 12 houses also all other components previously described with reference to fig. 1. At the bottom part of the casing 12 a support 17 can be provided which is adapted to receive the receptacle 7 thereon, into which the readily prepared frozen confection can be dispensed through the outlet 13. In one embodiment the support 17 can also be cooled by the cooling system 9.

In the following, different possibilities of revealing the container holder 15 will be explained.

In a preferred embodiment the device 1 comprises a movable portion 14, which can be moved into a predefined direction, so that the container holder 15 is revealed, so that the container 20 can be inserted into the container holder 15.

In this preferred embodiment the device 1 comprises a movable portion 14. Hereby the movable portion 14 itself can comprise the container holder 15. Consequently, by moving the movable portion 14, the container holder 15 is dragged into a position enabling the insertion of the container 20. Alternatively, the movable portion 14 can be a portion which covers the container holder 15 and by moving the movable portion 14 into a predefined direction, the container holder 15 is exposed.

In the embodiment shown in fig. 2 and 3, the movable portion 14 is implemented as a drawer 16 comprising the container holder 15, which can be pulled out of the device 1 and pushed back into the device 1. By pulling the drawer 16 out, the container holder 15 is revealed and the container 20 can be inserted into the container holder 15. Afterwards the drawer 16 can be pushed back into the device 1.

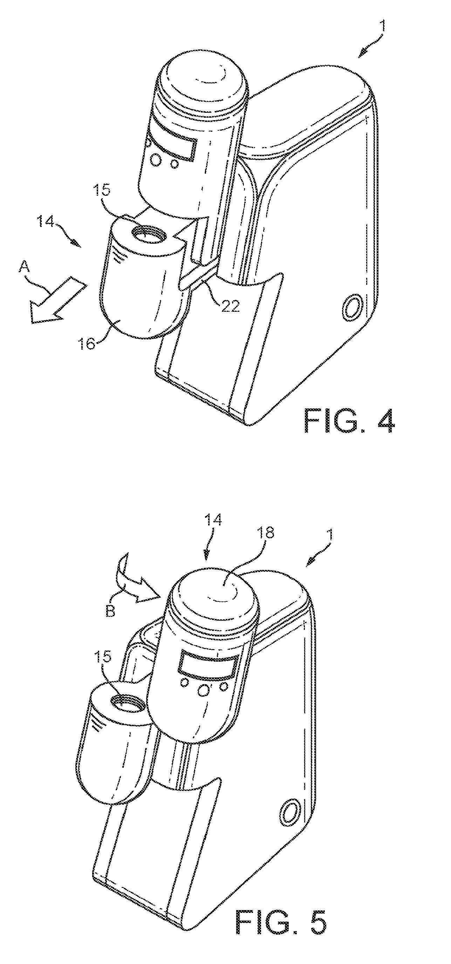

Fig. 4 to 7 show different embodiments of an opening mechanism for opening the device 1 in such a way that the container holder 15 is revealed and the container 20 can be inserted.

All the embodiments comprise a movable portion 14 which can be moved in such a way that the container holder 15 is reachable so that the container 20 can be inserted.

In fig. 4 the movable portion 14 is again implemented as drawer 16 comprising the container holder 15, which slides along bars 22 and in this way can be pulled out from the device and pushed back into the device 1. The drawer 16 hereby accomplishes a forward and backward movement as indicated by arrow A.

Fig. 5 shows a further embodiment where the moving portion 14 is a portion above the container holder 15 and can be rotated so that the container holder 15 is revealed. The rotation hereby in fig. 5 is indicated by arrow B.

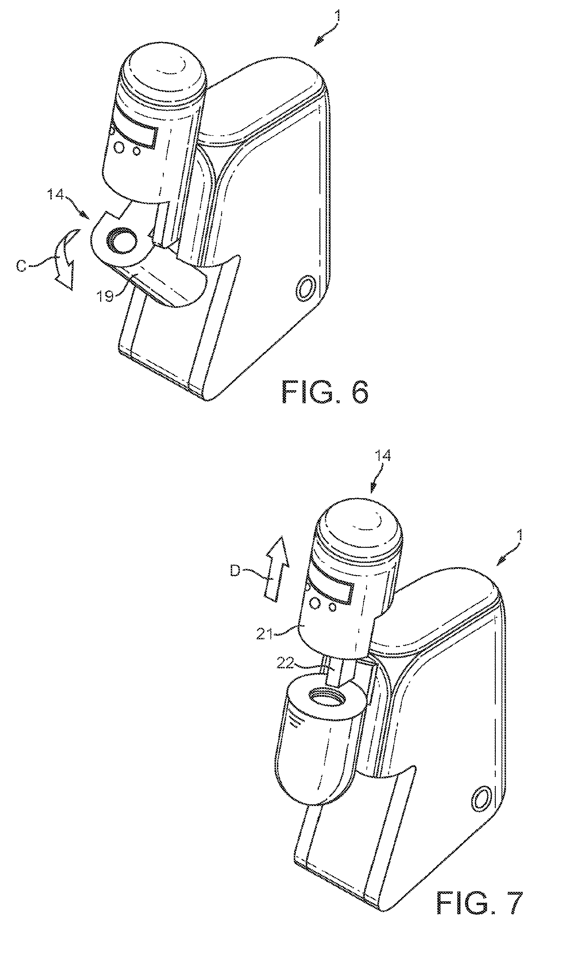

Fig. 6 shows a further embodiment of a movable portion, where the movable portion is a portion comprising the container holder 15 and implemented as a fold-away unit 19, which can be folded along a hinge downward as indicated by arrow C in order to reveal the container holder 15.

Fig. 7 shows a further embodiment, where the movable portion 14 is the portion above the container holder 15 which can be moved along corresponding bars 22 in order to reveal the container holder 15 and to close the device 1 again.

In a further alternative embodiment also two or more movable portions can be provided.

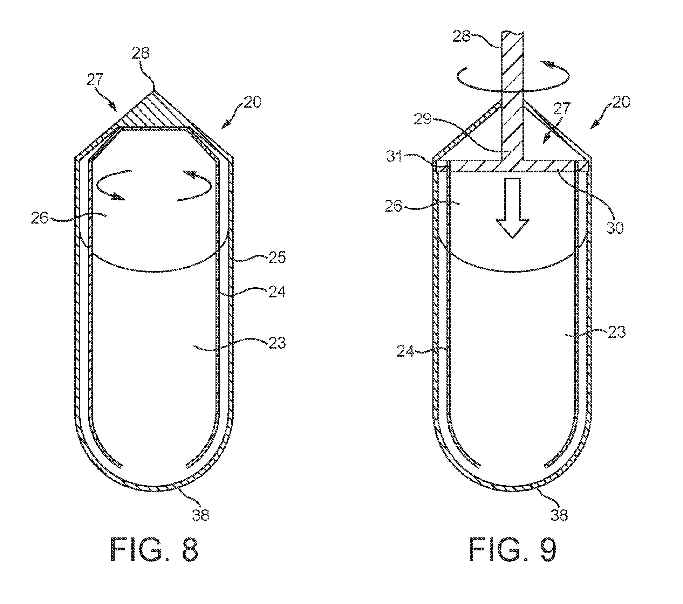

In the following with reference to Fig. 8 and 9, different embodiments of the container 20 will be explained in more detail. Generally, the container comprises ingredients 23 providing a frozen confection after being processed: cooled, scraped, mixed, kneaded and/or aerated. The container further comprises a processing unit within the container 20 to mix, agitate, and aerate the ingredients 23.In one embodiment as shown in Fig. 8 and 9 the processing unit is implemented as scraper 24, which processes the ingredients 23 and scrapes the ingredients 23 from the internal wall surfaces of the container 20. The scraper 24 comprises one or more blades, which preferably precisely contact the inside wall of the container 20.

The container 20 further comprises an opening 38 through which the readily prepared frozen confection can be dispensed. The opening 38 can comprise a breakable end or removable seal. Alternatively, a one-way dispensing orifice can be provided which is controlled by a pressure valve mechanism for dispensing.

The scrapers 24 or dashers scrape the inside surface of the container during freezing and in addition the scrapers facilitate the mixing and aeration process during freezing.

The container is preferably, but not limited to, made from a material with optimum heat transfer properties, e. g. aluminium, steel or the like.

Preferably, all materials of the container 20 and also all packaging materials of the container 20 are made from disposable and recyclable materials.

The physical properties of the casing 25 of the container 20 allow energy to be transferred from the ingredients 23 to an external source, i. e. heat energy to be transferred from the ingredients 23 to the cooling system 9.

The ingredients 23 preferably comprise a chilled or shelf-stable confection and a gaseous phase, e. g. air. In a preferred embodiment the amount of ingredients 23 range from 25 % to 80 % by volume and the rest of the container 20 is filled with gaseous phase 26. The ingredients 23 hereby provide a single portion of frozen confection.

Specifically, the single portion of chilled or shelf-stable ingredients mix is capable of producing between 50 to 300 ml of frozen confection. Instead of air also any other type of gas can be provided within the container 20 to allow for aeration and overrun. Alternatively or additionally, nitrogen can be provided within the container 20 for aseptic filling and extended shelf life.

When used in the present invention the term "frozen confection" is intended to refer to different types of frozen confection. Non-limiting examples are ice cream, sorbet, sherbet, water ice, frozen yogurt, frozen dairy, soft ice, Mellorine, frozen custard, non-dairy frozen confection, milk ice, ice lolly, gelato or frozen jelly.

In fig. 8 and 9 possible but not limiting embodiments of a container 20 are shown.

The container 20 comprises a translation unit 27 which is adapted to transfer kinetic energy of the movement unit 3 of the device 1, comprising for example a plunger or the like, to the scrapers 24. The translation unit 27 therefore is attached to the scrapers 24 and comprises a connector 28 for connecting to the movement unit 3.

The connector 28 preferably provides a quick connection to the device and motor assembly, i.e. a connection which can be fast and easily achieved.

In the embodiment shown in fig. 8 the translation unit 27 is integrated into the top of the container 20. The scrapers 24 are attached to the translation unit 27. The translation unit 27 comprises a connector 28 which can be connected to the movement unit 3, e.g. a respective plunger or the like of the device 1 in order to transfer a movement of the movement unit 3 via the translation unit 27 to the scrapers 24. The translation unit can for example be attached to the container in such a way to allow a rotational, axially linear and/or oscillating movement.

Fig. 9 shows a further embodiment of a container 20. In this case the translation unit 27 comprises a vertical pole 29, which is attached to the top of the container 20, and at the top comprises the connector 28. The vertical pole 29 at its lower end has connected thereto a disc 30 having attached thereto the scrapers 24. Specifically, in the preferred embodiment the disc 30 comprises grooves 31, into which the scrapers 24 are inserted, whereby the grooves allow to transfer the rotational movement from the translation unit 27 to the scrapers 24 but at the same time allow the scrapers 24 to slide along the grooves 31.

As indicated by corresponding arrows when the connector 28 is connected to a plunger or the like being for example driven by e. g. a motor spindle assembly, the movement can be transferred to the scrapers 24 within the container 20.

In the following different possibilities how to connect the connector 28 to the movement unit 3 of the device 1 will be explained.

In the following embodiments, the device 1 comprises a plunger 33, which is connected to the connector 28. But also every other possible shape and/or mechanism can be used to transfer the movement from the movement unit 3 to the scrapers 24.

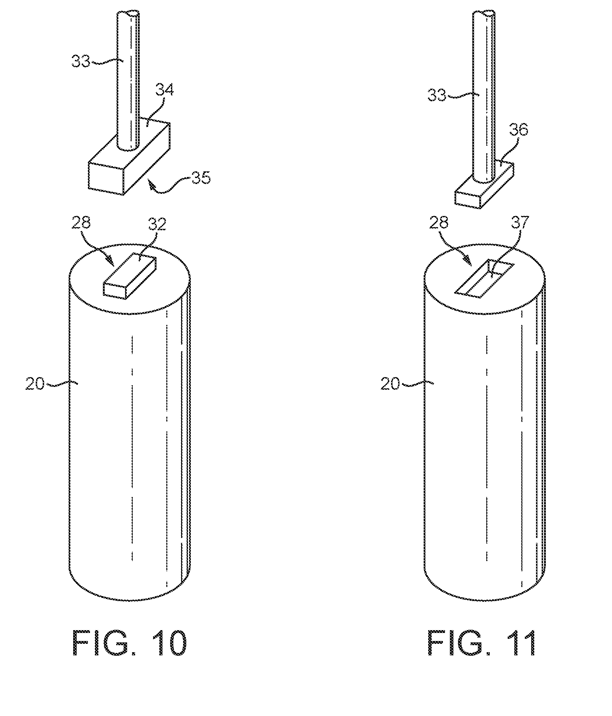

Fig. 10 shows a first embodiment where the container 20 comprises a connector 28 which is an embossment 32 on top of the container 20. The plunger 33 has a corresponding connection means 34 which has a recess 35 within (not shown in the figure) which fits exactly on the embossment 32. In a preferred embodiment the embossment 32 and the recess 35 have a rectangular shape, so that if the embossment 32 is inserted into the recess 35, the rotational force can be transmitted to the scrapers. More generally, the embossment and the recess have to cant with each other to allow for a rotational movement.

Fig. 11 shows a further embodiment, where the container 20 comprises a recess 37 and the plunger 33 at its end has connected thereto a pivot 36, which fits into the recess 37. In this preferred embodiment the pivot 36 and the recess 37 are also rectangular or may have any other shape allowing to cant with each other and to transfer a rotational movement.

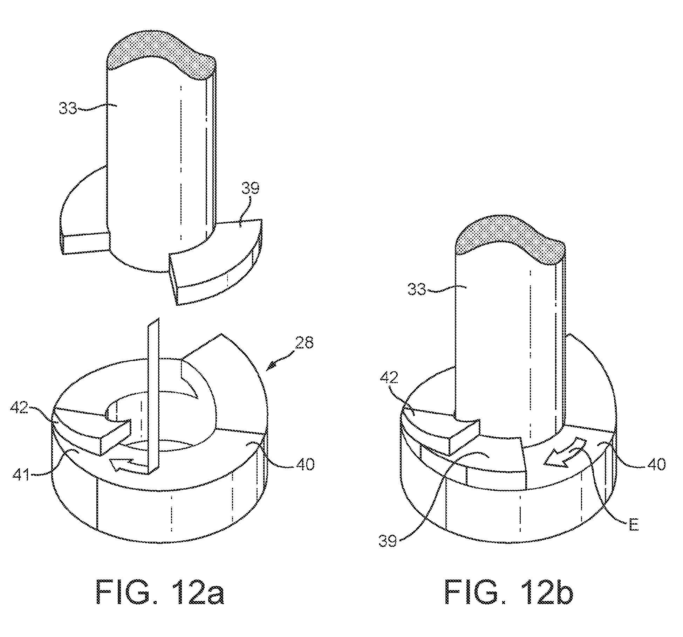

Fig. 12a and 12b show a further embodiment of a connection mechanism according to the present invention. In this case the connector 28 has a basement member 40 and at least one upper portion 42 above the base member 40, so that between the basement member 40 and the upper portion 42 a gap 41 is formed, which is open on one side.

The plunger 33 comprises at least one protruding portion 39. For connecting the plunger 33 to the connector 28, the plunger 33 is lowered down onto the basement member 40, so that the protruding portion 39 lies on the basement member 40. In the next step as shown in fig. 12b the plunger 33 is rotated, so that the protruding portion 39 is inserted into the gap 41 between the basement member 40 and the upper portion 42.

With this fixation a rotational movement can be transferred, since the gap 41 is closed on one side so that a rotational movement into the direction of the closed side of the gap 41 as indicated by arrow E is possible. At the same time, since the protruding portion 39 is fixed within the gap 41, also a vertical movement, e. g. an oscillating movement can be translated to the scrapers 24 (not shown in fig. 12a and 12b).

A rotational movement of the scrapers 24 and in addition also a vertical, i. e. an oscillating movement of the scrapers is described according to a further embodiment of the present invention. In this preferred embodiment during the rotational scraping process the scraper is simultaneously oscillated in the direction parallel to the axially linear direction of the scrapers 24 or generally of the processing unit and the container 20.

The scraper oscillation during rotational scraping is actuated by the spindle which is coupled to a drive system and actuating mechanism such as piezoelectric, magnetical, electrodynamic, mechanical or a reciprocating electric motor.

The amplitude and frequency of the oscillatory motion are selected to maximize the scraping efficiency of the scraper. The preferable amplitude and frequency ranges are 0,01 mm to 25 mm and 50 Hz to 50 kHz respectively.

The oscillatory movement in addition to the rotational movement has several advantages. The oscillation imparted to the blade of the scraper 24 reduces the interfacial coefficient of friction between the blade edge and the scraped surface (on which the frozen confection ingredient particles are formed). This oscillation is beneficial because such high frequency blade vibrations can improve the cutting performance of the blade minimising the unwanted influence of material and fabrication defects in the blade precision and sharpness. This increases the efficiency of scraping in terms of process time, particle size distribution, frozen confection quality and energy input.

The scrapers 24 can be designed in a number of different formats. They can be single or multi bladed, and have different contact angles. Any design which helps maximize the scraping efficiency is possible. In the embodiments shown in the present invention, the scrapers 24 comprise two blades, but the present invention is not limited to the shown embodiments.

Additionally, the scrapers or at least a part of the scrapers 24 can be hollow, so that a gaseous phase can be forced through the scrapers. The scrapers 24 in this embodiment further have therein small holes, so that through the tiny holes gaseous phase is injected into the frozen confection to maximize the aeration overrun and freezing efficiency.

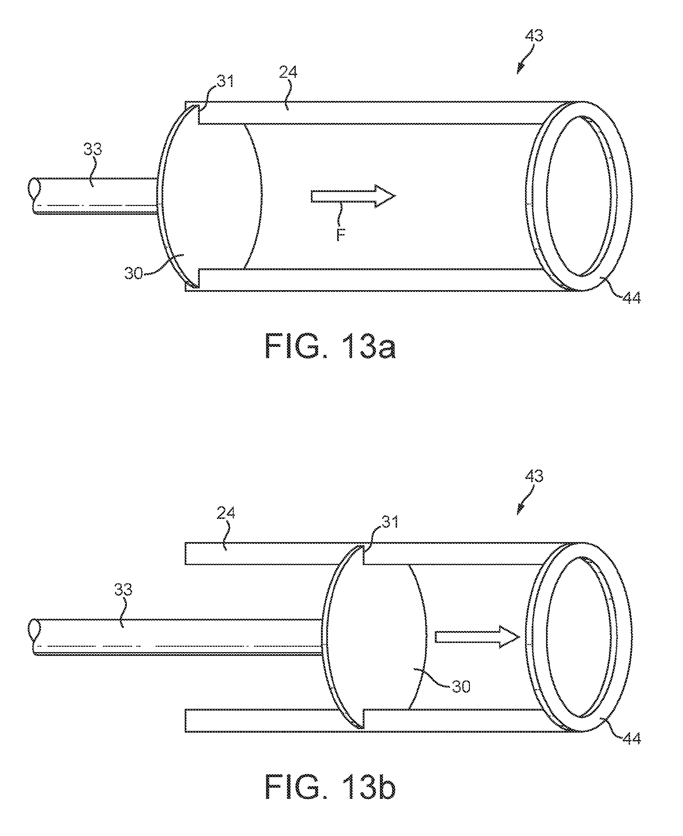

In fig. 13a and 13b a processing unit according to a first embodiment of the present invention will be described in more detail. In this embodiment the processing unit is a scraper assembly 43. In the figures the container 20 is omitted for the sake of clarity. The scraper assembly comprises a roundish bottom plate 44, which may have any other shape dependent on the shape of the container 20. Fixedly attached to the bottom plate are scrapers 24. The scrapers 24 as previously described are inserted into respective grooves 31 of a disc 30 which by a corresponding connector 28 is connected to the plunger 33. The grooves 31 enable an intimate coupling between the disc 30 and the scrapers 24 to allow a rotational as well as a vertical, i. e. axially linear, oscillatory or vibrational movement to be transmitted to the scrapers 24. In an alternative embodiment, the bottom plate 44 can also be omitted.

Fig. 13a shows the state where the scraping assembly 43 is used to scrape the ingredients 23 within the container 20. After the frozen confection is prepared, then a dispensing mechanism can be activated as shown in fig. 13b. For this purpose the plunger 33 is pushed into a direction parallel to the scrapers 24, in direction of the bottom of the container 20, where the opening 38 is provided, and as indicated by arrow F in the figures. Since the scrapers 24 can slide along the grooves 31 within the disc 30, i.e. the precision grooves 31 allow a scraper passage, the scrapers 24 mainly remain in the same position within the container and the disc 30 slides along the scrapers 24 so as to push the prepared frozen confection out of the container.

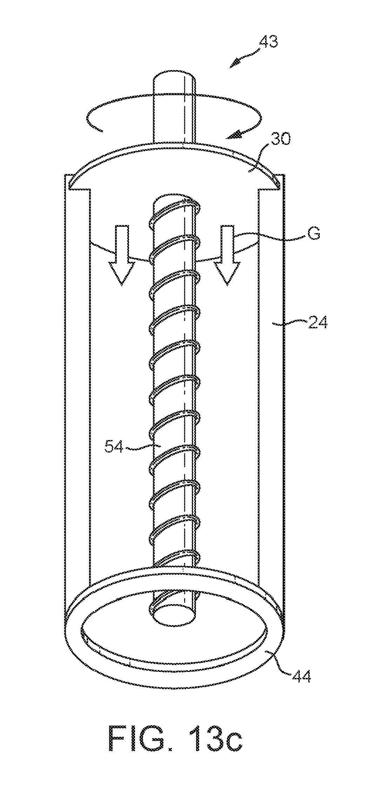

Fig. 13c shows a second embodiment of a processing unit with a scraper assembly 43, in which a central screw thread 54 runs along the central axis of the container and is used to guide the disc 30 from the top of the container 20 to the bottom, where the opening 38 is provided, and as indicated by arrow G in the figure. For this purpose a connector 28 is attached to the disc 30 (and therefore attached thereto the scrapers 24). The disc 30 has a central thread which sits on the unthreaded part of the central screw thread 54 on top of the container 20 but is not engaged to it. With this connection a rotational movement can be transferred to the disc 30 and therefore to the scraper assembly 43. After the frozen confection is prepared, then a dispensing mechanism can be activated by pushing the disc 30 further down and engaging the central screw thread 54. Once this is done, a unidirectional rotation by connector 28 will force the disc 30 also to rotate and move along and down the central screw thread 54 towards the opening 38 so as to push the prepared frozen confection out of the container.

Alternative dispensing mechanisms are to provide an inflatable bag on top of the container, which by the aeration system 8 can be inflated. Alternatively, pressurized air can be inserted into the container to force the prepared frozen confection out of the container 20.

In the following, the container holder 15 within the device 1 will be explained. Generally, the container holder 15 has a shape being adapted to the shape of the container 20, i.e. a shape which prior to processing allows the container 20 to rest tightly on the container holder 15.

In a preferred embodiment, the container 20 has a cylindrical shape and consequently also the container holder 15 has a cylindrical shape which allows to tightly wrap the container 20.

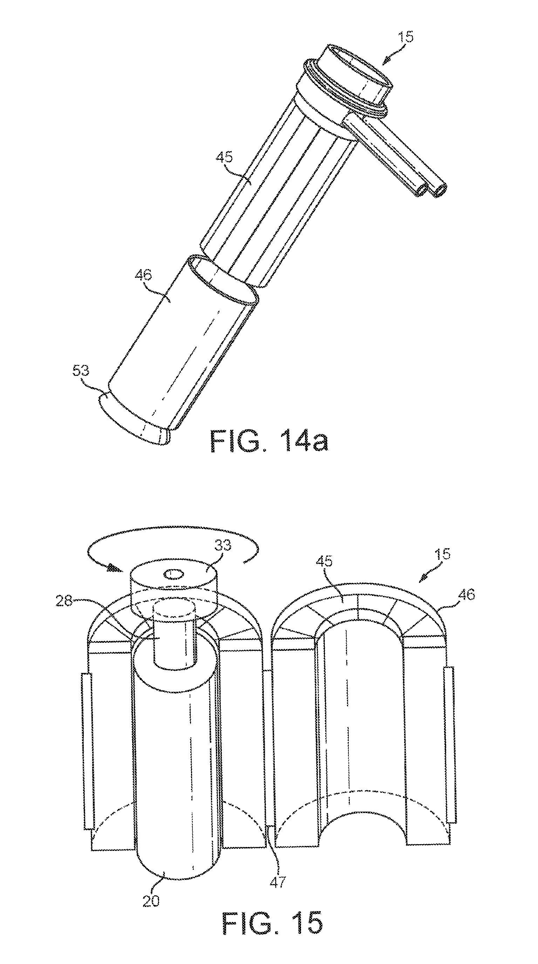

Fig. 14a shows a first embodiment of a container holder 15 according to the present invention. In this first embodiment the container holder 15 is made of one piece.

The container holder 15 is a heat exchanger that comprises a wall 46 surrounding the container holder 15 and along this wall channels 45 are running vertically along the length of the container holder 15. The design of the channels 45 allows for maximum heat transfer rates. The heat exchange surface is the internal surface of the container holder 15. The cooling, e. g. fluid, or evaporating refrigerant gas flows along these channels 45 at very low temperatures. The surface of the channels 45 comprises, but not limited to a rough surface in order to make refrigerant flow turbulent and thus enhance heat transfer. Heat is taken up due to the refrigerant's change of state caused by the low pressure in the heat exchanger, and consequently the low temperature. The low temperature of the heat exchanger is driving the exchange of heat from ingredients 23 to the refrigerant. Liquid refrigerant is preferably, but not limited to, injected at the bottom of the heat exchanger, whereas the refrigerant in the state of vapour is removed from the top of the heat exchanger.

In case defrosting of the internal heat exchange surface is necessary and the cooling system 9 is conventional vapour compression/evaporation, an automatic defrosting mechanism is provided by means of a reversible and controllable hot gas defrost valve which allows just sufficient quantities of hot gas from the cooling system 9 to be forced into the hollow channels of the container holder such that the temperature of the heat exchange surface is raised to a predetermined temperature and the surface is defrosted.

In case defrosting of the internal heat exchange surface is necessary and the cooling system 9 is thermoelectric (peltier) powered, an automatic electronic switch will reverse the polarity of the electric circuit powering the thermoelectric devices such that cool and hot -sides of the devices are reversed and the cool-side of the thermoelectric devices becomes the hot-side and the hot-side becomes cold-side such that the temperature of the heat exchange surface is raised to a predetermined temperature and the surface is defrosted.

In case a frosting plate is provided, the frosting plate 53 is placed at the bottom section of the container holder 15 to prevent frosting of the main heat exchanger surfaces.

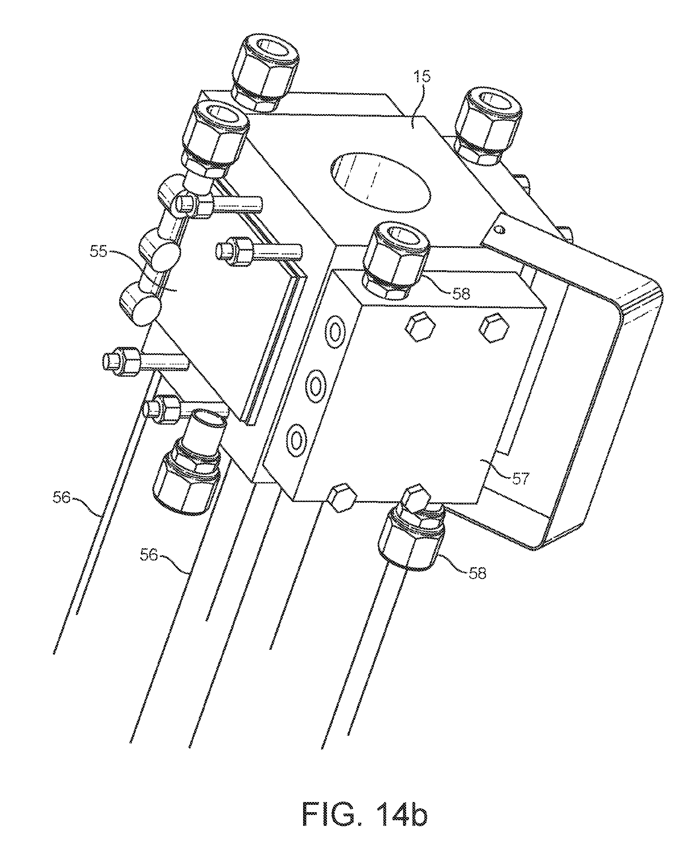

Fig. 14b shows a second embodiment of a container holder heat exchanger according to the present invention with an alternative cooling system based on a thermoelectric peltier system. The container holder 15 therefore comprises a one or more thermoelectric peltier units 55 attached to the external side wall of the container holder 15. Corresponding power leads 56 are connected to the thermoelectric unit 55. The number, shape and size of thermoelectric units that can be utilised are not limited to the embodiment shown in the figure.

A cooling fluid entry and exit 58 is also provided for a fluid based heat removal cell 57 for the heat energy produced by the thermoelectric units. The cooling fluid entry and exit 58 is connected to the fluid based heat removal cell 57. Alternatively, the heat energy produced by the thermoelectric units can be cooled directly by the surrounding environment, by an air fan, or other heat removal mechanism.

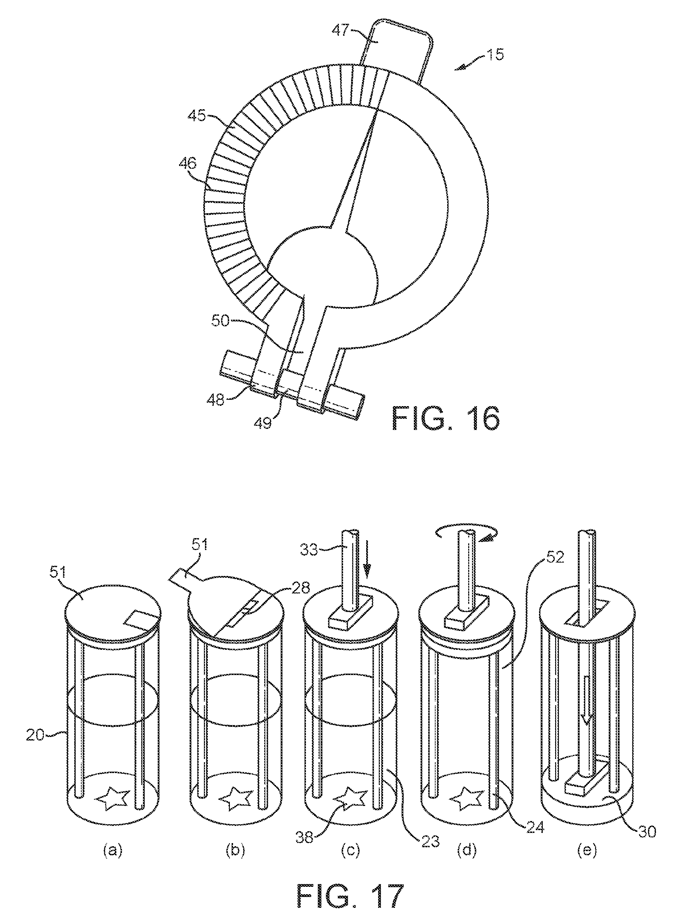

Fig. 15 shows a preferred embodiment of a container holder 15 according to the present invention. This embodiment is also shown in a perspective view in fig. 16. In this embodiment the container holder 15 comprises two portions, e.g. two hemisphere parts, which are connected via a corresponding hinge 47 and can be moved in relation to each other so as to open and close the container holder 15. This facilitates the insertion of a container 20. In order to enable a tight fit and to allow for optimum heat transfer rates an opening and closing mechanism is required. In this embodiment, a pin 49 within holes 48 of the two parts of the container holder 15 is provided which allows to reduce the gap 50 between the two parts of the container holder 15 and to squeeze the container 20 within the container holder 15.

With this preferred embodiment including the hinged design of the container holder 15, an easy insertion and removal of the container 20 is possible and at the same time a tight fit for maximum heat transfer between the surfaces of the container 20 and the container holder 15 is ensured.

The container holder 15 according to the second embodiment has several advantages. Due to the design of the container holder 15 and the heat transfer unit (evaporator) a minimum mass and a maximum primary surface for heat transfer are provided. The preferably rough surface, where the refrigerant is in contact with the internal finned channels of the capsule holder 15, ensures a maximum heat transfer due to turbulent flow. The design further allows a low pressure drop and a generous volume for the refrigerant.

Fig. 17 shows an image series of an example how the different steps for preparing a frozen confection could be accomplished.

In image a) a container 20 is shown which preferably comprises a removable and/or aseptic, preferably tamper evident seal (peel-off) 51 which as shown in image b) can be removed to reveal the connector 28. The seal 51 preferably is a hygienic tear-off seal revealing the connector 28. As already explained, the connector 28 has a corresponding design to deliver the rotational movement, and in a preferred embodiment the rotational together with the oscillatory movement, to the scrapers 24. As shown in image c) the plunger 33 is then connected to the connector 28 so that as shown in image d) the rotational force can be transmitted to the scrapers 24. As schematically shown the ingredients 23 when being cooled and rotated then result in the final frozen confection 52 and is ready. In the last step as shown in image e) the dispensing mechanism is activated by pushing the disc 30 into a direction towards the opening 38 of the container 20 so as to dispense the prepared frozen confection 52.

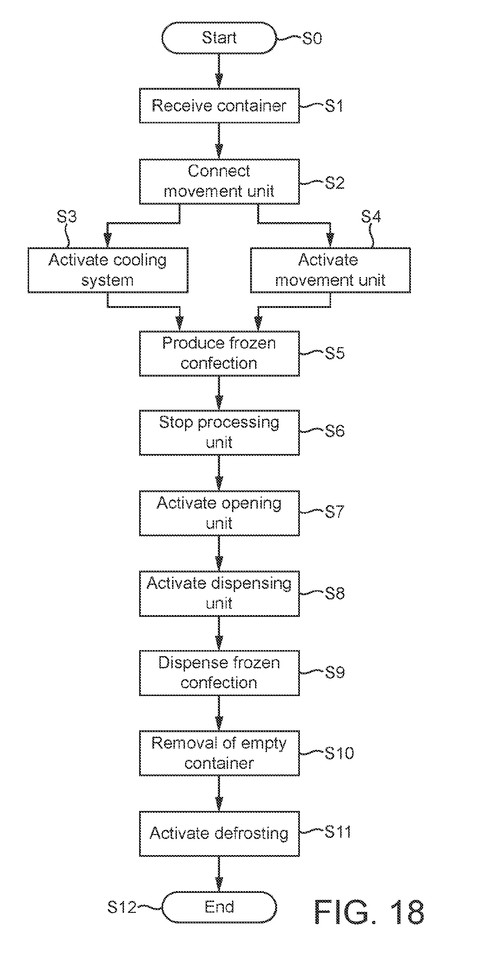

Fig. 18 shows a flow chart with an overview over the different steps for preparing a frozen confection 52 according to the present invention.

The process starts in step S0.

In step S1 the container 20 is received by the device 1, i. e. is input into the container holder 15. After removing the seal 51 from the connector 28, in the next step S2 the movement unit 3 of the device is connected to the connector 28 of the container 20. This can be accomplished either manually by a user or automatically by the device 1.

In the following step S3 the cooling system 9 is activated and begins to cool the container 20 rapidly and at the same time in step S4 the movement unit 3 is activated. In the next step S5 the frozen confection 52 is produced by cooling and processing the ingredients 15.

Once the optimal temperature and consistency of the frozen confection 52 is reached, then in the next step S6 the movement unit 3 is stopped and in step S7 the opening unit 4, if present, can be activated in order to open the container 20. As previously described this step can also be omitted and accomplished manually by a customer.

In the next step S8 the dispensing unit 5 is then activated and in the following step S9 the frozen confection 52 is dispensed from the container 20. Preferably, the plunger 33 which previously delivered the movement to the scrapers 24 now acts as dispenser forcing the frozen confection 52 through the opening 38.

In step S10 the empty container 20 is then removed from the device 1. Optionally, then a defrosting step S11 can be accomplished by activating the defrosting system, if present. This has the advantage that it is assured that there is no frosting on the container holder surface in readiness to receive the next container. The defrosting step can also be provided between or during other steps and/or between or during a plurality of steps. But in the preferred embodiment defrosting is accomplished after each production cycle. The process ends in step S12 and the device 1 is thus ready for receiving a new container 20 and preparing a further single portion of freshly made frozen confection.

The present invention thus enables the preparation of a frozen confection, which can be freshly prepared in single portions by a closed system. The containers provide a pre-dosed packaging containing all the necessary ingredients for preparing the frozen confection. The frozen confection is prepared inside the container.

With the present invention it is further possible to prepare several different types of frozen confections in a short time. Since the container is dispensable and does not need to be cleaned and importantly since key parts of the device do not come into contact with the frozen confection, the handling is simplified and the need for cleaning is reduced and/or eliminated.

### Reference signs

- (1): device for preparing a frozen confection
- (2): motor
- (3): movement unit
- (4): opening unit
- (5): dispensing unit
- (6): container holder
- (7): receptacle
- (8): aeration system
- (9): cooling system
- (10): defrosting system
- (11): activation unit
- (12): casing
- (13): outlet
- (14): movable portion
- (15): container holder
- (16): drawer
- (17): support
- (19): fold-away unit
- (20): container
- (22): bar
- (23): ingredients
- (24): scraper
- (25): casing of container
- (26): gas
- (27): translation unit
- (28): connector
- (29): pole
- (30): disc
- (31): grooves
- (32): embossment
- (33): plunger
- (34): connection means
- (35): recess
- (36): pivot
- (37): recess
- (38): opening
- (39): protruding portion
- (40): basement member
- (41): gap
- (42): upper portion
- (43): scraper assembly
- (44): bottom plate
- (45): channel
- (46): wall
- (47): hinge
- (48): hole
- (49): pin
- (50): gap
- (51): seal
- (52): frozen confection
- (53): frosting plate
- (54): central screw thread
- (55): thermoelectric unit
- (56): power leads
- (57): fluid based heat removal cell
- (58): cooling fluid entry and exit

## Claims

1. Container (20) designed for being inserted into a device (1) for preparing a frozen confection (52),
said container (20) comprising at least one scraper (24) movable within the container (20) and
said container (20) containing ingredients (23) for producing a frozen confection (52) when being cooled and moved.

2. Container (20) according to claim 1,
wherein said container (20) has a casing (25) having physical properties allowing heat energy to be transferred from the ingredients (23) to the ambient (external source).

3. Container according to claim 2,
wherein said casing (25) is made of a material with good heat transfer properties, preferably steel or aluminium.

4. Container according to any of the preceding claims, further comprising a connector (28) enabling connection to an external movement unit (3) for transferring a movement from the external movement unit (3) to the at least one scraper (24),
wherein the connector (28) preferably enables connection to the external movement unit (3) in such a way, that a rotational movement, preferably a rotational movement together with an oscillating movement, can be transferred to the at least one scraper (24).

5. Container according to any of the preceding claims, further comprising an outlet opening (38) for dispensing the frozen confection (52), wherein the outlet opening (38) has a removable and/or breakable seal.

6. Container (20) according to any of the preceding claims,
wherein the ingredients (23) provide a single portion of frozen confection (52) comprising 50ml to 300ml.

7. Container (20) according to any of the preceding claims,
wherein the ingredients (23) comprise an ambient shelf-stable or chilled confection and a gas.

8. Container (20) according to any of the preceding claims, wherein the frozen confection (52) is one of ice cream, sorbet, sherbet, water ice, frozen yoghurt, frozen dairy, soft ice, Mellorine, frozen custard, non-dairy frozen confection, milk ice, ice lolly, gelato or frozen jelly.

9. Container holder (15) adapted to receive a container (20) comprising ingredients (23) for preparing a frozen confection,
said container holder (15) having a heat exchange surface being in tight contact with the container (20) and
allowing heat energy to be transferred from the ingredients (23) to an external source.

10. Container holder (15) according to claim 9, further comprising channels (45) allowing a cooling agent to run along the heat exchange surface.

11. Container holder according to claim 9 or 10, comprising two portions connected to each other by a hinge (47) and
a pin (49) for fixing the two portions to each other when a container (20) is inserted.

12. A device (1) for preparing a frozen confection, comprising
a container holder (15) for receiving a container (20) having therein ingredients (23) for preparing a frozen confection (52) when being cooled and moved,
a cooling system for cooling the ingredients (23), and
a movement unit (3) connectable to the container (20) for transferring a movement to at least one scraper (24) movable within the container (20).

13. Device (1) according to claim 12,
wherein the movement unit (3) is adapted to transfer a rotational movement, preferably a rotational and an oscillatory movement, to the at least one scraper (24).

14. A system comprising a device (1) for preparing a frozen confection according to any of claims 12 or 13, said device (1) comprising a container holder (15) according to any of claims 9 to 11, and
said system further comprising a container (20) according to any of claims 1 to 8 inserted into the container holder (15).

15. A method for preparing a frozen confection, comprising the steps of
providing a container (20) having therein ingredients (23) for preparing a frozen confection (52) when being cooled and moved,
cooling the container (20) and
transferring a movement to at least one scraper (24) movable within the container (20).
